(19)

Europäisches
Patentamt
European
Patent Office
Office européen
des brevets

(11)  **EP 1 408 644 B1**

(12)  **EUROPEAN PATENT SPECIFICATION**

(45) Date of publication and mention
of the grant of the patent:
**11.08.2010  Bulletin 2010/32**

(51) Int Cl.:
***H04L 9/32*** *(2006.01)*

(21) Application number: **03021558.6**

(22) Date of filing: **24.09.2003**

(54) **Digital signatures for digital television application**

Digitale Unterschriften für digitale Fernsehanwendungen

Signatures numériques pour des applications de télévision numérique

(84) Designated Contracting States:
**AT BE BG CH CY CZ DE DK EE ES FI FR GB GR
HU IE IT LI LU MC NL PT RO SE SI SK TR**

(30) Priority: **08.10.2002  US 417404 P
09.09.2003  US 658077**

(43) Date of publication of application:
**14.04.2004  Bulletin 2004/16**

(73) Proprietor: **MICROSOFT CORPORATION
Redmond, Washington 98052-6399 (US)**

(72) Inventor: **Heredia, Edwin A.
San Jose,
California 95131 (US)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 130 492         WO-A-98/54633
US-A1- 2002 112 162     US-A1- 2002 124 172**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This invention relates generally but not exclusively to security of supplemental or interactive television content, and more particularly but not exclusively relates to signing supplemental or interactive television content.

### BACKGROUND

Traditional television content, such as shows and pay-per-view movies (hereafter program(s)), are generally delivered to a viewer as a continuous video stream. Traditional television content is most commonly distributed using a wireless broadcast system or a cable system. In the first instance, the content is received at individual homes through an antenna or a satellite dish. In the latter instance, the content is usually received through coaxial cable that terminates at set-top boxes.

To enhance the traditional way of viewing a program, there has been some effort toward the production of supplemental television content. As presently contemplated, the supplemental television content is created to provide enhanced content to the traditional television content. The supplemental content may be played along with the traditional television content, either displayed on the same region of a display device as the traditional television content, or displayed on a separate region of a display device from the traditional television content.

The supplemental content may furthermore be interactive content, enabling viewers to interact with the television program or the supplemental content in a more involved manner than simply watching the television program. The supplemental television content may, for example, ask the viewer questions about the television content, such as during a presidential debate, asking the viewer his or her presidential preference after each question in the debate; or asking a viewer questions about an advertised product. The supplemental television content may, for example, additionally play games with the viewer relating to the television content, describe behind-the-scenes aspects of making the program, or provide links to stores that sell merchandise that is sponsored by the program. In addition, the supplemental television content may not be tied to a particular program, but instead convey general information, such as tickers for news headlines, weather information, sports scores, and so forth.

One common approach today is to provide supplemental content to a viewer in the form of supplemental content applications, an application being a collection of files carrying code and associated objects (text, images, voice, audio, video, etc). Supplemental content may be delivered using the same communication channels as the broadcast media, or may be delivered through separate interconnecting channels like an Internet connection. Because the files that define an application carry instructions that will be executed by a receiver, it could happen that some unauthorized entity inserts damaging code as part of one of the application files before reception by the viewer. Upon execution, this piece of code may perform some unwanted operations in the receiver device. Examples of unwanted operations could be the blocking of certain TV channels, the display of annoying messages, or more serious such as reading private information, or using the client receiver to launch distributed denial of service attacks.

Because a file could be modified by an unauthorized entity, it is very convenient to digitally sign a supplemental content file as a means to provide integrity checking and source authentication at the receiver end. A digitally signed file gives a receiver an instrument and basis to detect if a file had been modified from the time it was digitally signed. An unauthorized entity that inserts or replaces file content from an original file will be detected by receivers that verify the status of the signature. A digitally signed file also gives the receiver an instrument and basis to verify that the signed file has an unbreakable binding to a particular signer whose identity must be registered by commonly available certification authorities. It would be convenient to have a method and device to associate a digital signature with an application or collection of files.

US 2002/124172 A1 relates to signing and validating web pages. In particular, web pages may include a trigger, which is one or more instructions of lines of code, or a flag that is embedded or appended to the web page or to a header of the web page. The purpose of the trigger is to invoke a software program or plug-in of such software program on a recipient computer system to verify and authenticate the web page. If the digital signature and digital certificate are included with or appended to the web page, then the software program will verify and authenticate the web page. While interpreting the web page, a software, for example, Internet Explorer, recognizes the trigger in the web page and invokes an object, which may already be loaded on the computer, or may be included with the web page. Once invoked, the object executes a validation and/or authentication process.

### SUMMARY

It is the object of the invention to provide a method and apparatus for signing and validating web pages of a supplemental television content application.

This object is solved by the present invention as claimed in the independent claims.

Preferred embodiments are defined by the dependent claims.

Briefly and not exclusively, a supplemental television content application architecture, associated methods creating and executing a signed supplemental television content application, and media having instructions for executing the methods are described.

In one exemplary embodiment, an architecture includes a signature for a cluster of at least a portion of the application files detached from the application files; and a start file having either an expression or a link to an expression having a link to each signature. The architecture also includes a web page comprising at least a portion of the application files that is coded with an attached signature or a link to the signature.

In one exemplary embodiment, a method includes identifying at least a first portion of the files in at least one cluster, determining a cluster signature for each cluster, and developing an expression that includes the location of the signature.

In one exemplary embodiment, a method includes identifying a first portion of the files that together compose a web page, determining a signature for the web page; and either storing a link to the signature in the web page, or the signature in the web page.

In one embodiment, a method includes determining if any of the files are arranged in a cluster. For each cluster, the method includes determining the location of the signature of the cluster determining the files that compose the cluster and verifying the integrity of the files in the cluster by operations including verifying the signature.

In one embodiment, a method includes determining if any files compose web pages. If any of the files compose web pages, then for each the web page, the method includes decoding the web page to determine if the web page has either a link to a digital signature or a digital signature, reading the signature, and verifying the signature.

## BRIEF DESCRIPTION OF THE DRAWINGS

The detailed description is described with reference to the accompanying figures.

FIG. **1** is an exemplary block diagram of a security information resource file.

FIG. **2** is a block diagram representation of an exemplary centralized architecture where a reference to digital signature data is incorporated in a start file.

FIG. **3** is a block diagram representation of an exemplary centralized architecture where a link to digital signature data is incorporated in a start file.

FIG. **4** portrays an exemplary XML metadata schema for a centralized architecture security information resource file.

FIG. **5** portrays an exemplary XML metadata schema for an element for specifying a location of a detached signature file for the centralized architecture security information resource file portrayed in FIG. **4.**

FIG. **6** portrays an exemplary XML metadata schema for an element for specifying delegate information for the centralized architecture security information resource file portrayed in FIG. **4.**

FIG. **7** portrays an exemplary XML metadata schema for an element for specifying delegate constraints for the centralized architecture security information resource file portrayed in FIG. **4.**

FIG. **8** portrays an exemplary XML metadata schema for an element for specifying cluster information for the centralized architecture security information resource file portrayed in FIG. **4.**

FIG. **9** portrays an exemplary XML metadata schema for an element for specifying cluster information for the centralized architecture security information resource file portrayed in FIG. **4.**

FIG. **10** is a block diagram representation of an exemplary decentralized architecture where the signature data and the security information resource file are attached files.

FIG. **11** is a block diagram representation of an exemplary decentralized architecture where a link to the signature data and the security information resource file are attached files, and the digital signature is a detached file.

FIG. **12** portrays an exemplary XML metadata schema for a decentralized architecture security information resource file.

FIG. **13** portrays an exemplary XML metadata schema for time stamp versioning.

FIGs. **14A-14B** portrays an exemplary method associating a supplemental content application with its digital signatures.

FIG. **15** portrays an exemplary method processing digital signatures upon receiving a supplemental television content application.

## DETAILED DESCRIPTION

In this description, reference is made to the accompanying drawings which form a part hereof, and in which is shown, by way of illustration, specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

Before describing embodiments, it is useful to describe some concepts used herein. Supplemental content is composed of individual files. A collection of these individual files is termed an application. Typically in television having supplemental content, an application starts with a start file. A start file is a file or a data structure that describes parameters to execute an associated application. A subset of application files is termed a cluster. Clusters are useful for grouping files that may have a logical organization and may be commonly signed. For example all files representing objects for a web page may constitute a logical cluster. Similarly, all web pages that form a section in an electronic newspaper may constitute another logical cluster. A main cluster is an application file subset that includes a security information resource file as described herein.

A file is said to be static during a time interval if during the time interval, the file does not change its content. A file is said to be dynamic during a time interval if during the time interval, the file changes its content at least one time. For example, a daily electronic newspaper may maintain an application (the daily newspaper) for an interval lifetime of one day. During the interval lifetime, some files may change their content and are therefore said to be dynamic during the interval. Illustratively, a page containing the latest news in the electronic newspaper may update headlines continuously during the interval of the file having the headline. Others may not change and are therefore termed static during the interval lifetime.

An application is said to be static during a time interval if during the time interval, each file in the application is static and the collection of files that compose the application remains constant. An application is said to be dynamic during the time interval, if during the time interval it is not static. During an application lifetime, new files of an application could be created or incorporated into the application. For example, in an e-commerce transaction, a server may not know a priori the type of items a user may be interested in looking at. Upon request, the server may create a web page dynamically according to the user's preferences and interests.

A cluster is said to be static during a time interval if during the time interval, each file in the cluster is static, and the collection of files in the cluster remains constant. A cluster is said to be dynamic during the time interval, if during the time interval it is not static.

A Web-Page or Web-Page Cluster is a grouping of files (e.g. text files, image files, script files) that may be displayed together as a single page. A Web-Page File is a file that includes hypertext markup language (HTML) or extensible hypertext markup language (XHTML) (or other markup representation) and which describes the presentation and layout for a Web-Page Cluster.

A detached signature is a signature that exists as a separate file and which is used to sign one or more application files, such as each of the files composing a cluster. An attached signature is a signature that exists as internal data in a file, and which is used to sign the file that hosts the signature. If the file that hosts the signature is a Web Page File that is a constituent of a Web Page Cluster, the same signature can be used to sign files in the Web Page Cluster.

Described herein is a structure and method for signing a supplemental television content application. The structure includes two architectures for signing applications, a centralized architecture and a decentralized architecture, both of which are described presently. Both the centralized architecture and the decentralized architecture may be used in different portions of the same application.

The centralized architecture uses a start file to indicate the location of digital signatures. In the centralized architecture, a file termed the security information resource file includes a specification of the location of the signature file, for each file cluster referenced in the security information resource file. In one implementation, the start file includes the security information resource file. In another implementation, the start file includes a reference (or link) to the location of the security information resource file.

The decentralized architecture does not use a start file to indicate the location of the digital signatures, but instead includes a digital signature as an attached file in an application file, or alternatively a link to the digital signature from an attached file in the application file. The decentralized architecture may use a security information resource file to provide other application signing information. Illustrative embodiments of the centralized and the decentralized architecture are described presently.

## Security Information Resource File

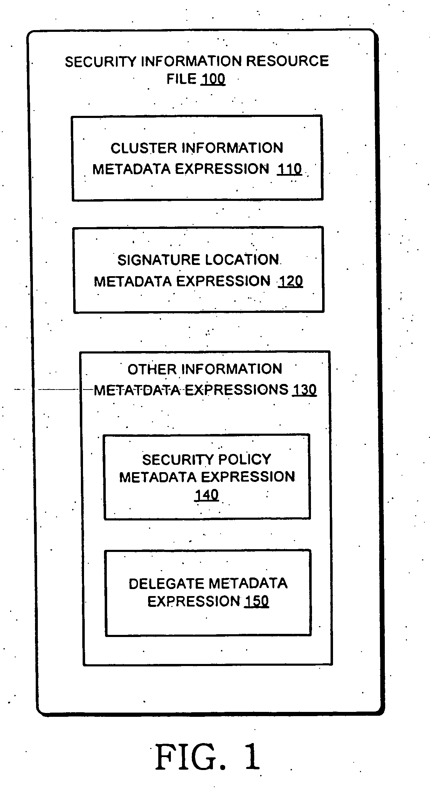

FIG. **1** portrays an exemplary security information resource file **100**. A security information resource file **100** is a collection of expressions that provide overall information about signing an application. The security information resource file **100** in the centralized architecture may exist as additional data in a start file, or as a separate file referenced from the start file. The security information resource file **100** in the decentralized architecture may exist as an attached file in an application file or Web Page.

In one implementation, the security information resource file 100 is implemented using a markup language such as Extensible Markup Language (XML). XML is a flexible way to create common information formats and share both the format and the data on the World Wide Web, intranets, and elsewhere. In one implementation, the security information resource file **100** is signed to prevent unauthorized modifications to the information.

In the centralized architecture, the security information resource file **100** includes a cluster information metadata expression **110** for each defined cluster of the application, to identify each cluster. Clusters are used to group files so that one digital signature is used for signing the cluster, rather than separately signing each file of the cluster. In the centralized architecture, the security information resource file **100** includes a signature location metadata expression **120** for each identified cluster. The signature location metadata expression **120** for each identified cluster describes the location, such as a Uniform Resource Locator (URL) or link, of the detached signature for that cluster.

The security information resource file **100** may include other information metadata expressions **130** that describe other information about the digitally signed applications. The other information metadata expressions **130** in one implementation may include security policy metadata expressions **140** having links to documents describing security policies. The other information metadata expressions **130** in one implementation may describe delegate metadata expressions **150** identifying delegates that may sign a cluster for at least one identified cluster(s)in addition to the main signer, or delegates that may sign the application in addition to the main signer. Certain components of an application might be generated by parties other than the main entity. In one implementation receivers of supplemental applications recognize these other parties as trusted originating entities. For example, a network that distributes software to hundreds of broadcast affiliates may allow affiliates to insert software components for local commercials. The term delegate refers to a certain party other than the principal source entity that signs portions of an application using detached cluster signatures, attached file signatures, or attached message signatures.

Examples of both a centralized and a decentralized architecture security information resource file **100,** and a centralized and a decentralized architecture system, are given below.

## Centralized architectures

In one implementation, the security information resource file **100** is described using XML schema. In a centralized architecture, the security information resource file **100** includes a reference to the digital signature for each described cluster, and a description of the application clusters.

In one implementation, the security information resource file **100** may also include other information. This other information may include links to documents describing security policies; and the identities, properties, and constraints of delegates (if any) that may sign a cluster(s) or an application in addition to the main signer.

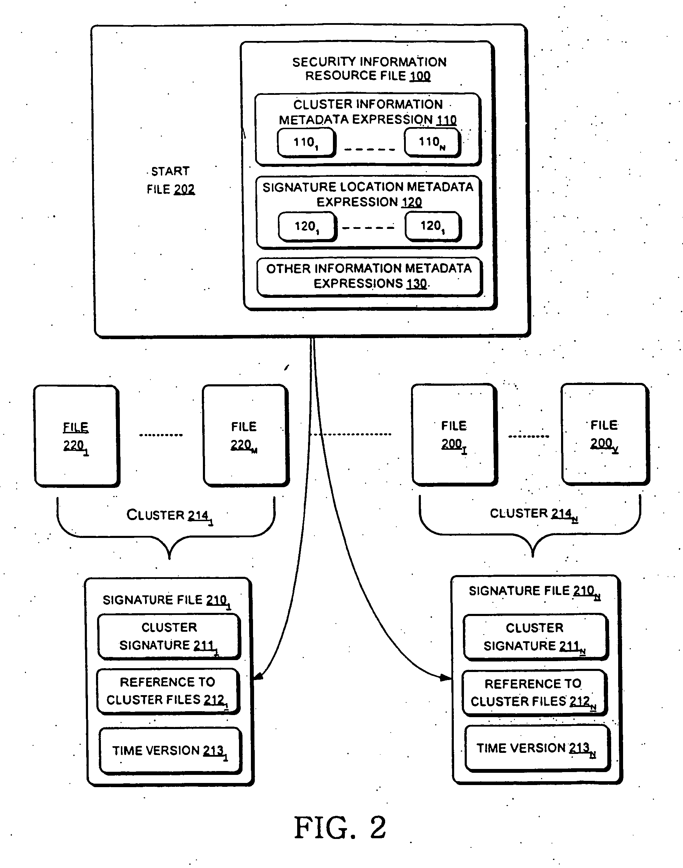

FIG. **2** portrays an implementation of a centralized architecture in which a reference to the digital signature data is incorporated into the start file. Referring now to FIG. **2,** a start file **202** includes a centralized architecture security information resource file **100**. The centralized architecture security information resource file **100** is a collection of expressions that provides overall information about signing the application.

The centralized architecture security information resource file 100 includes a cluster information metadata expression $110_i$ for each cluster "i", i= 1 to n to name each cluster "i." The centralized architecture security information resource file **100** includes a signature location metadata expression $120_i$ for each identified cluster $214_i$, i=1 to n. The signature location metadata expression $120_i$ describes the location, such as a URL or link, of the detached signature file $210_i$ for the cluster $214_i$. Each cluster $214_i$ is associated with respective files **220**. Illustratively, cluster $214_1$ is associated with the files $220_1$-$220_m$, and cluster $210_n$ is associated with the files $220_t$-$220_v$. A detached signature file $210_i$ includes the digital signature $211_i$ of the cluster $214_i$. The signature $211_i$ may include the hash code of each of the files composing the cluster, and a digital signature for signing at least the hash codes of each of the files. The process of signing a cluster entails calculating the cluster digital signature $211_i$. For a static cluster, the cluster signature may only be calculated once. For a dynamic cluster, the cluster signature may be calculated each time a file of the cluster changes. Thus, a selection of a cluster should reflect the quantity of files in the cluster, as well the dynamic nature of the files in the cluster. The digital signature file $210_i$ may include a reference to cluster files $212_i$ referencing a location or an identification of the files **220** composing the cluster $214_i$. In one implementation, the reference to the files is stored outside the signature file $210_i$, such as in the security information resource file **100**. The digital signature file $210_i$ may include a time verification record $213_i$ for describing the version of the signature as a function of the files $220_i$ composing the cluster $214_i$. This may be used for determining whether a signature $211_i$ reflects the current cluster files for a dynamic cluster. In one implementation the time verification record $213_i$ is stored outside the signature file $210_i$, such as in the security information resource file **100**.

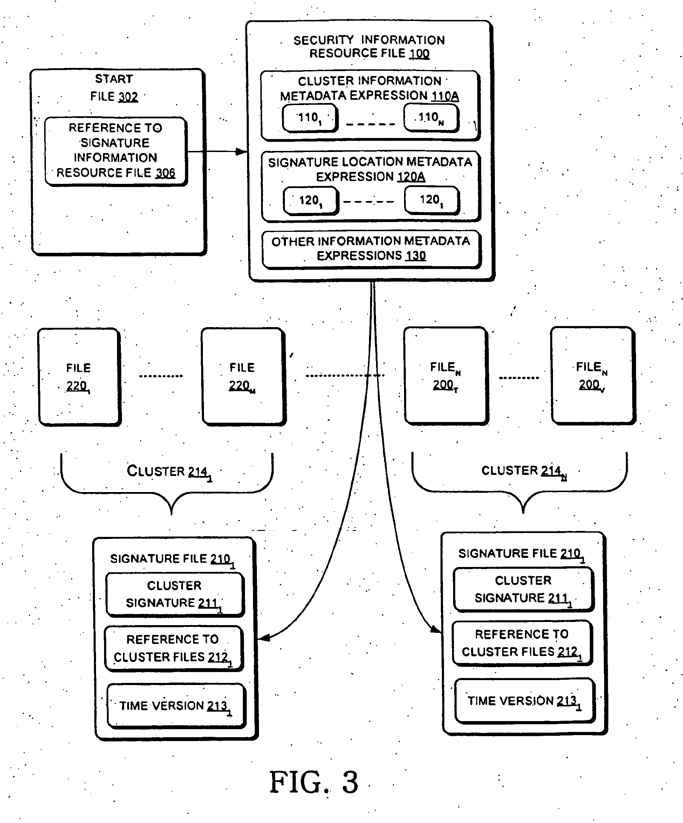

FIG. **3** portrays an implementation of a centralized architecture in which a reference for accessing a reference to the digital signature data is incorporated into the start file. Referring to FIG. **3,** a start file **302** includes a reference to centralized architecture security information resource file **100**. As described with reference to FIG. **2,** the centralized architecture security information resource file **100** includes a cluster information metadata expression **110** for clusters 1 to "n," and a signature location metadata expression **120** for clusters 1 to "n" that specifies the location of the cluster

signature files $210_1$-$210_n$, each signature file $210_i$ containing a detached digital signature $211_i$ associated respectfully with a cluster $214_i$. In one implementation, the centralized architecture security information resource file **100** also includes other information metadata expressions **130**, such as links to documents describing security policies; and the identities, properties, and constraints of delegates (if any) that may sign an application.

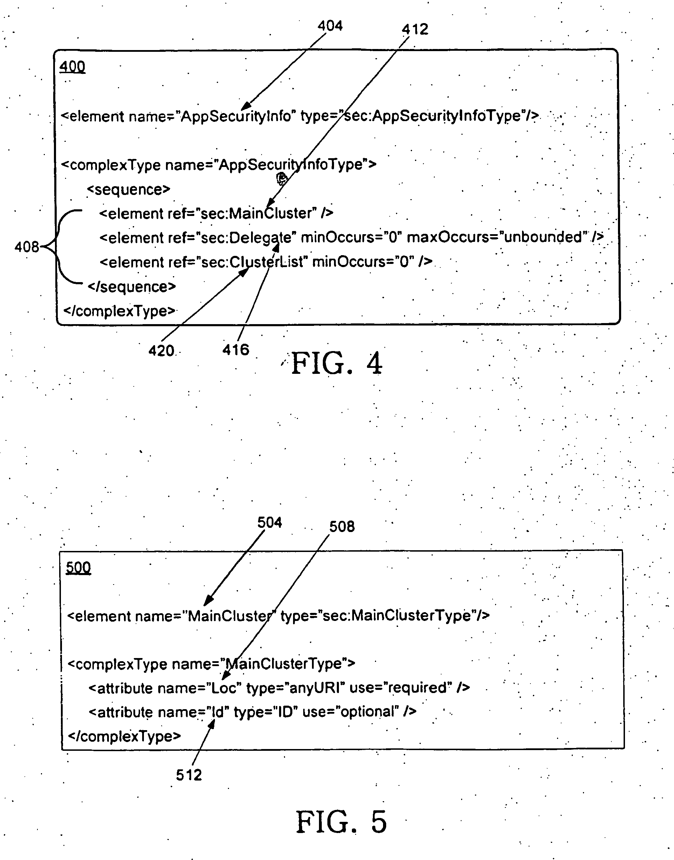

FIG. **4** presents an illustrative XML metadata schema **400** for defining the structure and components **408** of an exemplary document root of the centralized architecture security information resource file **100**. The element AppSecurityInfo **404** is the document root. The components **408** include the element MainCluster **412**, the element Delegate **416**, and the element ClusterList **420**.

FIG. 5 presents an illustrative metadata schema **500** to specify a structure of the element MainCluster **412** (FIG. **4**). Element MainCluster **504** specifies a location of the detached signature file $210_i$ (FIG. **2** or **3**). The attribute Loc **508** indicates the location from which the signature file of the main cluster may be retrieved, formatted as a Uniform Resource Identifier (URI). The attribute Id **512** is optional and used for referencing element MainCluster from other parts of the parent document or other documents.

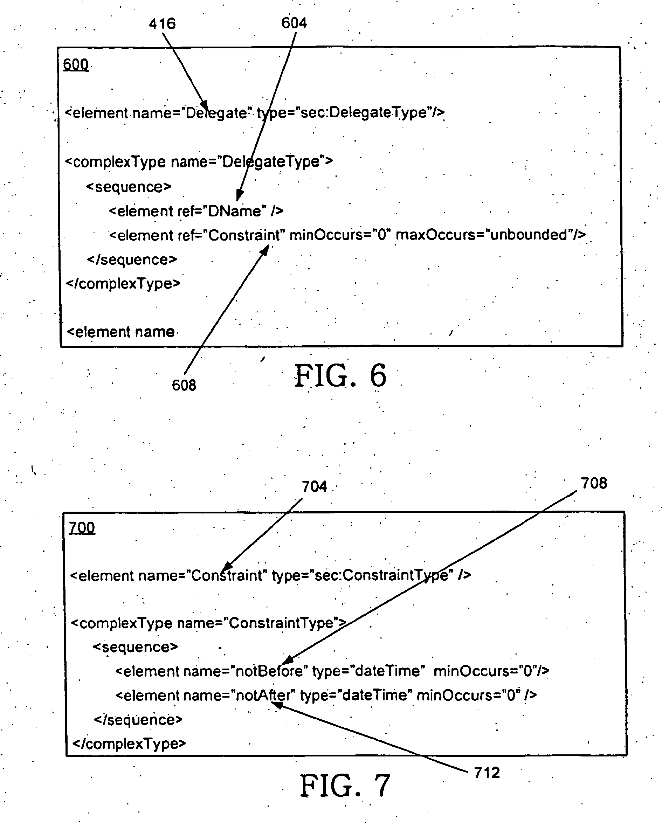

FIG. **6** presents an illustrative metadata schema **700** to specify a structure of the element Delegate **416** (FIG. **4**). The element Delegate **416** specifies name identification for delegate entries capable of signing portions of an application with permission of the application's Principal Source Entity. This element may appear outside or inside a cluster list in the centralized architecture signature information metadata **100**.

Appearance outside the cluster list may indicate that the named delegate may sign different portions of the application without constraints. The Delegate may sign files using cluster signature files, attached file signatures, or attached message signatures. In particular, the delegate may sign trigger resources (one kind of attached file signature). Appearance inside the cluster list may indicate that the named Delegate may sign only the corresponding cluster signature file.

The element DName **604** provides the delegate's distinguished name, for matching with similar information in the delegate's certificate. Zero or more elements termed Constraint **608** may describe constraints on the ability to sign application portions. A schema that defines the element DName is: <element name="DName" type="string" />. The rules for accurately representing the distinguished name as a text string are similar to the rules for encoding the element X509SubjectName described in the XML Digital Signature Standard, RFC 3275, "XML-Signature Syntax and Processing," Internet Engineering Task Force (IETF), March 2002.

FIG. **7** presents an illustrative metadata schema **700** to specify the structure of the element Constraint **704**. The element Constraint **704** specifies a constraint that may be imposed on the delegates. The notBefore element **708** and the notAfter element **712** are one implementation to provide time boundaries to a delegate's ability to sign portions of an application.

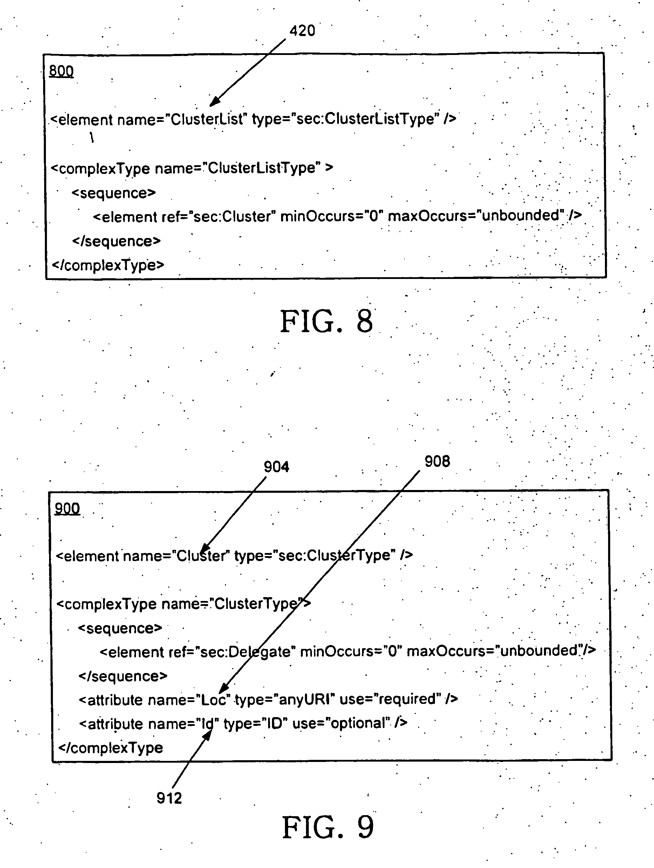

FIG. **8** presents an illustrative metadata schema **800** specifying the element ClusterList **420** (FIG. 4). The element ClusterList **420** defines a wrapper for all the clusters that compose an application.

FIG. **9** presents an illustrative metadata schema **900** that specifies the element Cluster **904**. The attribute Loc **908** indicates the URI from which to receive the cluster signature file. The attribute ID **912** is optional and used for referencing the element Cluster **904** from other parts of the parent document or other documents.

## Decentralized architectures

The security information resource file **100** is described using XML schema. A decentralized architecture describes a security information resource file **100** as an attached file. The decentralized architecture signature data is alternatively an attached signature data, or a separate detached signature file where an attached link in a Web Page file points to the detached signature file.

One of the features of the structure described herein is an ability to sign dynamic applications. In one implementation described above with reference to the centralized architecture, dynamic applications are signed using clusters having corresponding signature files that change with file changes. In another implementation, attached file signatures, or links to attached file signatures are used, that change as the associated file changes. A decentralized architecture enables the association of signatures directly to individual web-pages. A decentralized architecture can be used for the static or dynamic web pages of markup language based applications, and for web pages created dynamically by procedural applications at the client side. The decentralized architecture does not rely upon clusters. Thus in the decentralized architecture, a security information resource file includes signature data but need not include a description of the application clusters. In one implementation, the security information resource file **100** includes other information about digitally signed applications, such as links to documents describing security policies and the identities of delegates that may sign the application in addition to the main signer.

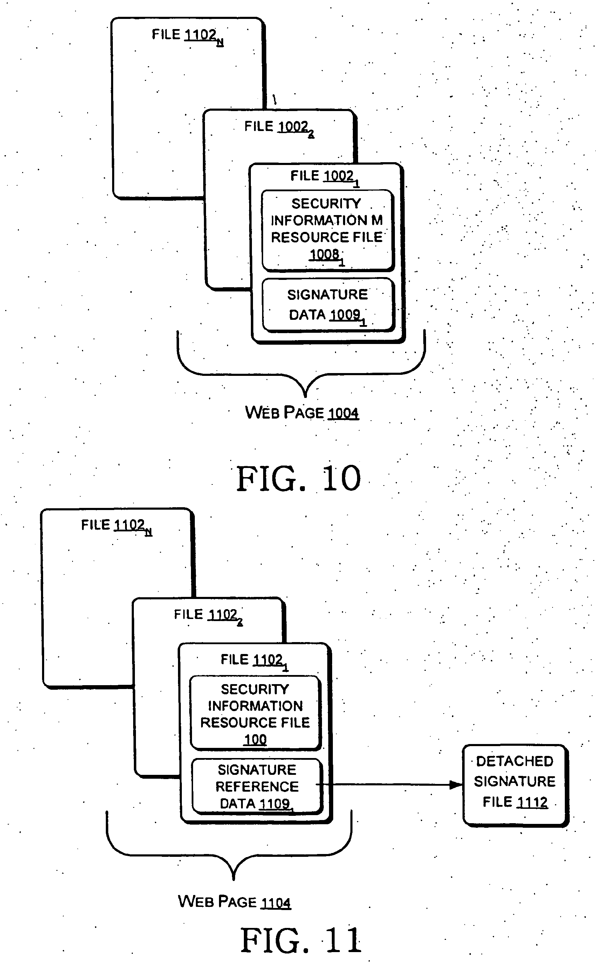

FIG. **10** portrays an implementation of a decentralized architecture in which a security information resource file $1008_1$ and signature data $1009_1$ are established as attached files. Referring to FIG. **10**, the files $1002_1$-$1002_n$ compose a Web Page **1004**. The file $1002_1$ may include a security information resource file **1008**. The security information resource file **1008** includes optional information about signing the Web Page **1004** such as links to documents describing security policies, and the identities, properties, and constraints of delegates (if any) that may sign an application. The File **1002₁** includes an attached signature data **1009₁** for the Web Page **1004**. In one implementation, the signature data **1009₁** may be included as a component of the security information resource file **1008₁**.

FIG. 11 portrays an implementation of a decentralized approach in which a security information resource file **100** is established as an attached file. Referring now to FIG. **11**, the files **1102₁-1102ₙ** compose a Web Page **1104**. The file **1102₁** may include a security information resource file **100**. The security information resource file **100** includes optional information about signing the Web Page **1104** such as links to documents describing security policies, and the identities, properties, and constraints of delegates (if any) that may sign an application. The file **1102₁** includes signature reference data **1109₁** referencing (or linking to) a detached signature file **1112**.

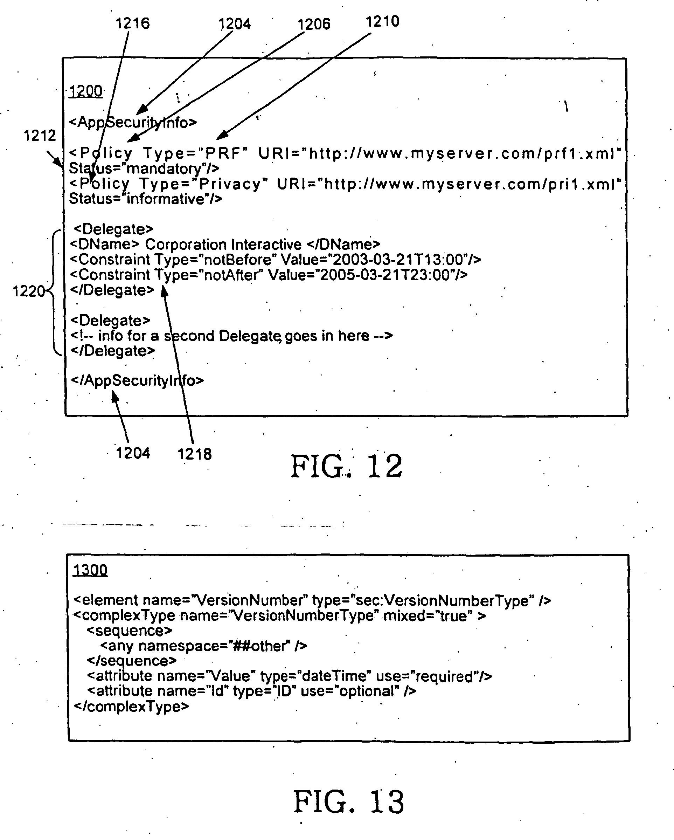

FIG. **12** presents an illustrative XML metadata representation of a decentralized architecture security information resource file. The XML metadata representation **1200** starts and ends with <AppSecurityInfo> elements **1204** as it did in the illustrative centralized approach with reference to the centralized architecture schema **400** portrayed in FIG. **4.** Notice that unlike the centralized architecture schema **400,** the decentralized representation **1200** carries no information about clusters, because a decentralized architecture does not require cluster information in advance. In one implementation, information for policies and delegates can exist inside the <AppSecurityInfo> elements **1204.**

Two policy declarations have been illustratively provided. The first policy declaration **1206** specifies the location of a PRF (Permission Request File) **1210.** A PRF typically indicates allowed and disallowed operations for an application. Notice that the attribute called "Status" **1212** indicates whether the schema **1200** must be interpreted and decoded for security reasons. The second policy declaration **1216** defines the location of a file that may contain a privacy statement from the application developer. Other policy files may be included similarly.

The schema **1200** includes a list of Delegates **1220**. Delegates are entities (persons or organizations) that may sign portions of an application in addition to the main signer. Notice that the <Constraint> **1224** is formatted differently than was presented in FIG. **7.** This is a matter of format preference and has no technical implication.

When a decentralized architecture is used for signing a Web Page (or a Web Page Cluster), and when detached signatures are used for this purpose , there is a need to define a method that associates the Web Page and the file that carries the detached signature. A syntactical extension of the XHTML link element is used to provide reverse linkage between an XHTML document, its associated objects, and a cluster signature file. One or more link elements of the following form:

<link rev="ClusterSignature" type+"text/xml" href="..." />

The href attribute provides an absolute or relative location of the cluster signature file. When a web engine encounters an XHTML (or HTML) page that carries this type of link element at the head of the document, it recovers the associated signature file for signature verification. If the signature verifies, the web engine runs and display the XHTML or HTML page.

**Signature File Format**

In one implementation, the format of signature files is composed of a subset of elements of the XML Digital Signature Standard, RFC 3275, "XML-Signature Syntax and Processing," Internet Engineering Task Force (IETF), March 2002. An illustrative subset comprising the metadata expressions and comments appears below in TABLE 1:

TABLE 1

| [XML-DSIG] Elements | Support Conditions |
|---|---|
| Signature | Yes. It defines the root element. |
| SignedInfo | Yes. It defines the set of references for digest and signatures. |
| SignatureValue | Yes. It carries the actual signature for the document. |
| KeyInfo | Yes. It defines certificate retrieval mechanisms. |
| Object | Yes. It will carry a special time stamp for versioning. |
| CanonicalizationMethod | Yes but the algorithms could be limited to a single canonicalization algorithm (C14n without comments) |

7

(continued)

| [XML-DSIG] Elements | Support Conditions |
|---|---|
| SignatureMethod | Yes but the algorithms could be limited to RSA with SHA1. |
| Reference | Yes. It provides referencing function for external files and internal objects within the Signature construct. |
| Transforms | Yes but allowing possibly only a limited number of transforms: canonicalization and removal of attached signatures. |
| DigestMethod | Yes. It defines the standard SHA-1 algorithm as the means to provide a message hash. |
| DigestValue | Yes. It carries the actual digest value for a given Reference. |
| KeyName | May not be necessary for initial implementations |
| KeyValue | May not be necessary for initial implementations |
| RetrievalMethod | Yes. It is used to retrieve raw X.509 certificates from some location. |
| X509Data | Yes. A few of its children elements should be used to support X.509 certificates and CRLs. |
| PGPData | Not necessary. PGP is outside the scope of this type of digital signatures |
| SPKIData | Not necessary. SPKI issues are outside the scope this type of digital signatures |
| MgmtData | Not necessary. Deprecated by [XML-DSIG] |
| DSAKeyValue | Not necessary for initial implementations |
| RSAKeyValue | Not necessary for initial implementations |
| P, Q, G, J, Y, Seed, PgenCounter | Not necessary. DSA and its cryptographic attributes are outside the initial scope of this type of digital signatures |
| Modulus, Exponent | Not necessary for initial implementations. Separate declaration of RSA cryptographic attributes is not necessary if one uses certificates. |
| X509IssuerSerial | Not necessary for initial implementations. X509 information will be carried using certificates. |
| X509SKI | Not necessary for initial implementations. X509 information will be carried using certificates. |
| X509SubjectName | Not necessary for initial implementations. X509 information will be carried using certificates. |
| X509Certificate | Yes. Used for certificate insertion when necessary. |
| X509CRL | Yes. Used for CRL insertion when necessary. |
| PGPKeyId | Not necessary. PGP is outside the scope of this type of digital signatures |
| PGPKeyPacket | Not necessary. PGP is outside the scope of this type of digital signatures |
| SPKISexp | Not necessary. SPKI issues are outside the scope of this type of digital signatures |
| Manifest | Yes. It defines a less strict binding between digests and files during the core validation process. |
| SignatureProperties | Yes. It will be used for carrying signature document time stamps for versioning. |

The subset includes multiple <Reference> elements, each of which defines a file location, and which define also the transformations and algorithms for signatures. The <KeyInfo> element defines the location of additional public-key infrastructure (PKI) components to provide signatures. The additional PKI components include certificates and certificate revocation lists. The <DigestValue> provides the result of applying a one-way mathematical hash function to a file. After receiving the file, a receiver performs similar operations on the received file. Identical digest values are necessary for signature verification. The <SignatureValue> element carries the actual signature bytes derived from the proper transformation and signature algorithms. The transformation procedures include canonicalization, a method to minimize and exclude non-essential information in files prior to applying the. digital signatures.

The <VersionNumber> element is to identify the most recent version of the digital signature. This element is not defined in the XML Digital Signature Standard, but is a novel implementation to enable tracking older files by receiving devices. When multiple versions of a signature have been cached by receiving devices, there is a need to determine which of those versions is the most current.

## Time Stamp Versioning

In one implementation, a time stamp is used to provide versions for signature files but which serves also to provide source non-repudiation operations. In implementations having dynamic clusters, time stamp versioning is to provide versions for signature files which serves also to provide non-repudiation operations. This construct may be included in cluster signature files as well as attached file signatures. Referring to FIG. **13**, a schema **1300** may be included in signature files under a separate namespace, using the <SignatureProperties> element of the XML Digital Signature Standard, RFC 3275, "XML-Signature Syntax and Processing," Internet Engineering Task Force (IETF), March 2002.

## Embodiments For Creating and Verifying Supplemental Content

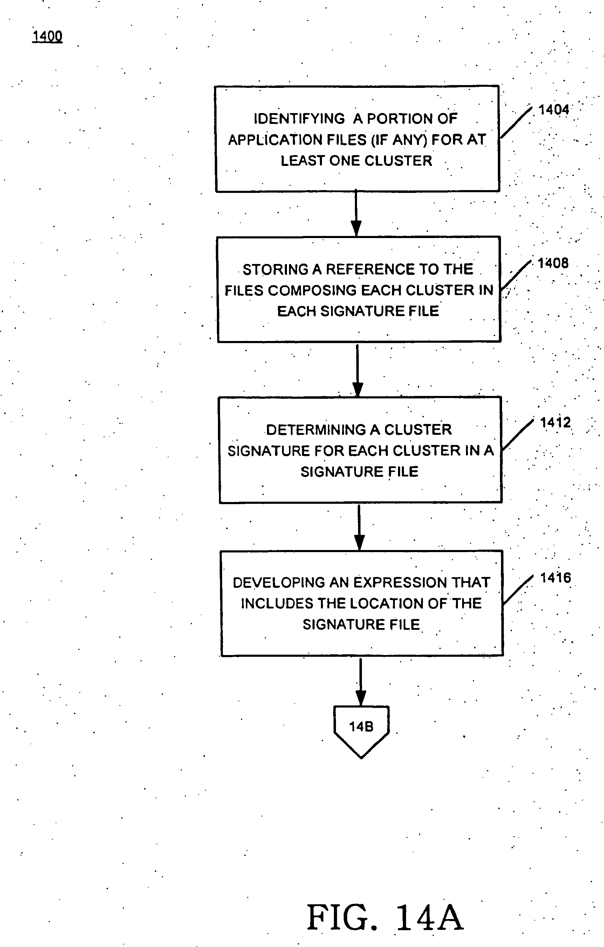

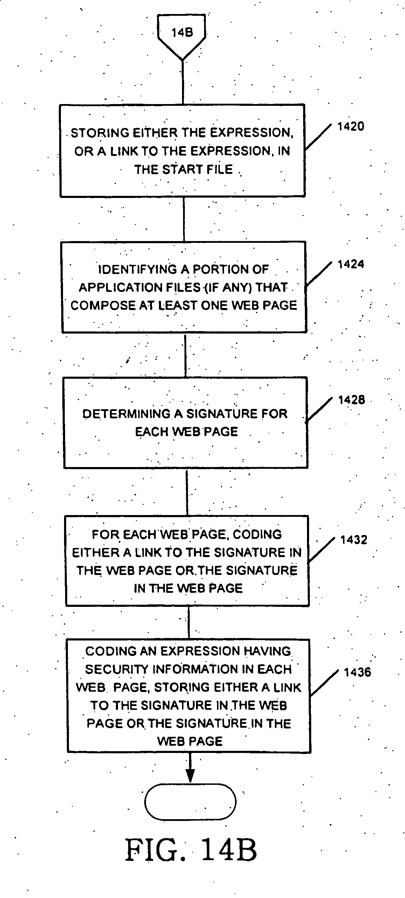

FIGs. **14A-14B** portray a method **1400** to associate applications with their digital signatures. In one implementation, at least one processor in at least one supplemental television content server includes instructions that when executed by the processor(s), cause the processor(s) to execute the method **1400.**

Operation **1404** identifies an at least one portion of application files (if any) with at least one cluster. This operation determines which files of an application will be clustered (if any), which will be identified with each cluster, and which files (if any) will have attached signatures or link to attached signatures. In one implementation, the identity of files to associate in a cluster are influenced by whether the files to be associated with the cluster are static or dynamic.

If files are clustered, they will have a security information resource file referencing a cluster signature file. The security information resource file in one implementation is included in the application start file. In one implementation, a link to the security information resource file is included in the application start file.

Operation **1408** stores a reference to the files composing each cluster in the cluster's signature file, such as a location or an identification of the files composing the cluster. In one implementation, the reference to the files is stored outside the signature file, such as in the security information resource file. In one implementation, a signature verification record is stored in the cluster signature file. In one implementation the time verification record is stored outside the signature file such as in the security information resource file. The time verification record is used for describing the version of the signature as a function of the files composing each cluster, and is used for determining whether a signature reflects the current cluster files for a dynamic cluster.

Operation **1412** determines the cluster signature for each cluster in a signature file. As described with reference to FIG. **2,** in one implementation a detached signature file includes the hash code of each of the files composing the cluster, and a digital signature for signing at least the hash codes of each of the files.

Operation **1416** develops an expression that includes the location of the signature file for the files to be clustered. In one application, this is the security information resource file **100** described with respect to FIG. **1,** and FIGs. **4-9** and **13**. In one implementation, the security information resource file **100** is an XML metadata expression. As described with reference to FIG. **1,** the security information resource file may include a cluster information expression, a signature location expression, and other information expressions. In one implementation, the security metadata resource file is signed to prevent unauthorized modifications to the information. Operation **1420** stores the expression, or a link to the expression, in the start file.

Operation **1424** identifies at least one portion of the application files (if any) that compose at least one web page. As described in the section describing the decentralized architecture section, a decentralized architecture enables the association of signatures directly to individual web-pages. The web pages may be static or dynamic web pages of markup language based applications. Dynamic web pages may be created at the client or server side.

Operation **1428** determines a signature for each web page. For each web page, operation **1432** codes in the web page either the signature or a link to the detached signature. Operation **1436** optionally codes in each web page an expression having security information. In one implantation, this is the security information resource file **100** described with respect to FIGs. **1** and **12.** In one implementation, the security information resource file **100** is an XML metadata expression. As described with reference to FIG. **1,** the security information resource file for a decentralized architecture includes other information about digitally signed applications, such as links to documents describing security policies and the identities of delegates that may sign the application in addition to the main signer. In one implementation, the security information resource file is signed to prevent unauthorized modifications to the information.

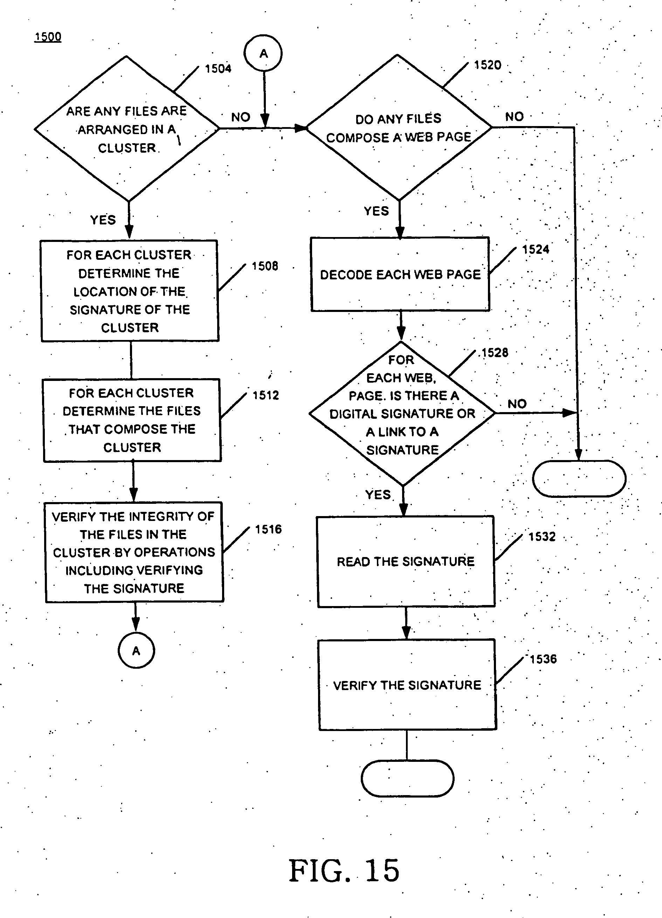

FIG. **15** portrays an exemplary method **1500** of processing digital signatures upon receiving supplemental television content application files. In one implementation, at least one processor in a supplemental television content client includes instructions that when executed by the processor(s), cause the processor(s) to execute the method **1500.**

Operation **1504** determines whether any files are arranged in a cluster for a centralized architecture embodiment. In one implementation, an application start file is retrieved and decoded. If the application start file includes or references (points to) a security information resource file, the signature resource file indicates that there are files arranged in a cluster. The start file is an initial file or data structure carrying application run parameters, and which commonly references an application boot file which starts the actual execution of an application.

If there are any files arranged in a cluster, then the YES branch is taken from Operation **1504.** Operation **1508** determines for each cluster the location of the signature of the cluster. In one implementation, the signature of each cluster is in a signature file **210.** In one implementation, the signature information resource file **100** is decoded to obtain the location of the cluster signatures. Operation **1512** determines the files that compose the cluster. The files are commonly in the signature file or the security information resource file.

Operation **1512** determines the files that compose each cluster. In one implementation, a reference to the files composing each cluster is stored in the signature file and operation **1512** decodes the signature file to obtain the identify of the files. In one implementation, the security information resource file includes the files associated with each cluster and operation **1512** decodes the security information resource file to obtain the identify of the files.

Operation **1516** verifies the integrity of each of the files in a cluster by operations that include verifying the signature of each cluster. In one implementation, the signature information resource file includes a list of delegates and their constraints on delegate signature data (if any), and a list of applicable policy data (if any). In one implementation, the security resource file or the signature file includes time verification information to determine if the files that comprise a cluster have changed since the signature was calculated. In one implementation, the signature is verified by retrieving related certificates and revocation lists, verifying the status of the retrieved certificates and revocation lists, applying proper transformation procedures to the file, calculating the file digest value, and comparing the file digest value with the digest preset in the signature file. Signatures may also be provided by delegates. If signatures are provided by delegates, delegate constraints are checked. If time verification information is provided, this information is used in verifying the signature of each cluster. In one implementation, the security information resource file is signed and the security information resource file signature is verified.

If there are not any files arranged in a cluster, then the NO branch is taken form Operation **1504.** Operation **1520** determines whether any files compose a Web Page for the decentralized architecture embodiment. If the YES branch is taken from operation **1520,** operation **1524** decodes each web page to determine if the web page has a web page signature or a link to a web page signature. If the web page has a web page signature or a link to a web page signature, the YES branch is taken from operation **1528** and in operation **1532** the signature is read. In operation **1536** the signature is verified. In one implementation, the signature is verified by retrieving related certificates and revocation lists, verifying the status of the retrieved certificates and revocation lists, applying proper transformation procedures to the file, calculating the file digest value, and comparing the file digest value with the digest preset in the signature file. Signatures may also be provided by delegates. In one implementation the web page includes a signature information resource file which is decoded to obtain signature information such as delegate information to help in verifying the signature. If signatures are provided by delegates, delegate constraints are checked.

If in operation **1520** or **1528,** the NO branch is taken, then the remaining files (if any) are considered not signed because a link element for digital signatures does not exist, an attached digital signature does not exist, and the file is not a component of an application cluster. A client operating system will typically warn the user that a file has not been signed or that a signature is not valid. A user may decide to continue the installation process or not. The operating system may reject the file. If the purpose is to install and run the software automatically which is a typical interactive television application, then a standards may mandate that unsigned applications will have restricted access to system resources. This means that unsigned applications may be able to display some things on the screen but would not be able to do some more threatening operations like accessing a local file or connecting to some computer over the internet. Typically, an unsigned application runs in a sandbox, and only signed applications can do things outside the sandbox.

The phraseology and terminology used is for the purpose of description and should not be regarded as limiting. The language in the patent claims may not capture every nuance, or describe with complete precision the range of novelty. Moreover, it is understood that the depicted acts in any described method are not necessarily order dependent, and in an implementation there may be intervening acts.

Several other implementations are possible, including the following derived from Figure **15**: (1) An application may not process operation **1504** through operation **1516** because it does not include a centralized signature schema, (2) an application may process operation **1520** to operation **1536** at the time of running and not during initialization, (3) an application may process some clusters using operation **1504** through operation **1516** during initialization, but process other clusters at the time of running and only if needed.

The present invention is not limited by what has been particularly shown and described herein above. The specific features and operations are disclosed as exemplary forms of implementing the claimed subject matter. It is to be understood that the invention is not necessarily limited to the specific features or diagrams described. The scope of the invention is defined by the claims which follow.

**Claims**

1. A method of signing a supplemental television content application being a collection of files carrying code and associated objects, the method comprising:

   identifying (1404) at least a first portion ($220_1$-$220_M$, $200_T$-$200_V$) of the files in at least one cluster ($214_1$, $214_N$);
   determining (1412) a cluster signature ($211_1$, $211_N$) for each cluster; and
   developing (1416) a security information resource file (100) that includes a specification (120, $120_A$) of the location of the signature.

2. The method of claim 1 wherein said signature for each cluster is based on a hash code of the files composing the cluster.

3. The method of claim 1 wherein the application comprises a start file (202, 302) and further comprising storing the security information resource file in the start file.

4. The method of claim 1 wherein the application comprises a start file and further comprising storing a link to the security information resource file in the start file.

5. The method of claim 1 further comprising storing at least one of delegate information identifying delegates that may sign the cluster or the application, security policy information, time verification information for describing the version of the signature, and file identification information for each cluster in the security information resource file.

6. The method of claim 1 further comprising storing the cluster signature in a signature file, developing a reference to the files composing the cluster, and storing the reference to the files in the signature file.

7. The method of claim 1 further comprising storing the cluster signature in a signature file, developing a time verification record for the cluster for describing the version of the signature, and storing the time verification record in the signature file.

8. The method of claim 1 further comprising developing at least one of a reference to the files composing the cluster, and a time verification record for the cluster for describing the version of the signature.

9. The method of claim 1 wherein a second portion of the files comprises a web page and further comprising determining a signature for each web page.

10. The method of claim 9 wherein the web page is at least one of a web page of a markup language based application and a web page dynamically created by procedural applications at a client.

11. The method of claim 9 further comprising at least one of:

    developing a link to the signature and storing the link in the web page; and
    storing the signature in the web page.

12. The method of claim 1, wherein identifying at least a first portion of the files further comprises identifying (1424) a first portion of the files that together compose a web page (1004, 1104); the method comprising:

    determining (1428) a signature for the web page; and
    storing one of a link (1109) to the signature in the web page, or the signature (1009) in the web page.

13. The method of claim 12 further comprising storing the security information resource file in the web page.

14. The method of claim 13 wherein the security information resource file comprises at least one of security policy information data, and delegate data identifying delegates that may sign the cluster or the application.

15. A method of executing a supplemental television content application being a collection of files carrying code and associated objects, the method comprising:

determining (1504) if any of the files are arranged in a cluster;
for each cluster:

determining (1508) the location of the signature of the cluster;
determining (1512) the files that compose the cluster; and
verifying (1516) the integrity of the files in the cluster by operations including verifying the signature;
wherein determining the location of the signature of the cluster comprises decoding a security information resource file to obtain the location of the cluster signatures.

16. The method of claim 15 wherein the determining if any of the files are arranged in clusters operation further comprises:

determining if an application start file (202, 302) has a record that includes one of a reference to the security information resource file having the location of the signature, and the security information resource file;
reading from the security information resource file the location of a file having a signature of a cluster for each cluster; and
determining if the signatures can be verified.

17. The method of claim 16 wherein each of the files composing a cluster is stored in one of the security information resource file, and a file storing a signature.

18. The method of claim 16 wherein each signature is based on a hash of each file composing the cluster.

19. The method of claim 16 wherein the reading operation further comprises reading whether there are any delegates that may sign the cluster or the application for any of the clusters, and determining if a signature is valid based on the delegates.

20. The method of claim 16 further comprising reading time verification information for describing the version of the signature associated with a cluster and determining if the signature may be valid based on the time verification information.

21. The method of claim 15 further comprising determining if any of the files is a web page file having one of a link to a signature and a signature; reading the signature, and verifying the signature.

22. The method of claim 15 further comprising:

determining (1520) if any files compose web pages; and
if any of the files compose web pages, then
for each of the web pages, decoding (1524) the web page to determine (1528) if the web page has one of a link to a digital signature and a digital signature,
reading (1532) the signature, and
verifying (1536) the signature.

23. A supplemental television content architecture comprising:

application files ($220_1$-$220_M$, $200_T$-$200_V$); and
an at least one signature file ($210_1$, $210_N$) having a signature ($211_1$, $211_N$) of at least a portion ($214_1$, $214_N$) of said application files, the signature file being separate from said application files; and a start file (202, 302) having one of a security information resource file (100) having a link to each signature file, and a link (306) to a security information resource file having a link to each signature file.

24. The architecture of claim 23 further comprising:

an at least one web page (1004, 1104) comprising at least a portion of said application files and each web page coded with one of a signature (1009) and a link (1109) to the signature (1112).

25. The architecture of claim 23 wherein the security information resource file further has cluster information.

26. The architecture of claim 23 wherein the security information resource file further has at least one of delegate information identifying delegates that may sign the cluster or the application and security policy information.

27. The architecture of claim 23 wherein the signature file further has at least one of a reference to cluster files and time verification information for describing the version of the signature.

28. The architecture of claim 24 wherein the web page further comprises a metadata expression.

29. The architecture of claim 28 wherein the metadata expression comprises at least one of security policy information and signature delegate information.

30. One or more computer readable media having stored thereon a plurality of instructions that, when executed by at least one processor, causes the processor to perform acts comprising:

identifying (1404) at least a first portion ($220_1$-$220_M$, $200_T$-$200_V$) of supplemental television content application files in at least one cluster ($214_1$, $214_N$), the supplemental television content application being a collection of files carrying code and associated objects;
determining (1412) a cluster signature ($211_1$, $211_N$) for each cluster; and
developing (1416) a security information resource file (100) that includes a specification (120, $120_A$) of the location of the signature.

31. The computer readable media of claim 30 wherein the signature for each cluster is based on a hash code of the files composing the cluster.

32. The computer readable media of claim 30 wherein the application comprises a start file and said acts further comprise storing the security information resource file in the start file.

33. The computer readable media of claim 30 wherein the application comprises a start file and said acts further comprise storing a link to the security information resource file in the start file.

34. The computer readable media of claim 30 wherein the security information resource file further includes at least one of delegate information identifying delegates that may sign the cluster or the application, security policy information, time verification information for describing the version of the signature, and file identification information for each cluster.

35. The computer readable media of claim 30 wherein said acts further comprises storing the cluster signature in a signature file, developing a reference to the files composing the cluster, and storing the reference to the files in the signature file.

36. The computer readable media of claim 30 wherein said acts further comprise storing the cluster signature in a signature file, developing a time verification record for the cluster for describing the version of the signature, and storing the time verification record in the signature file.

37. The computer readable media of claim 30 wherein said acts further comprise developing at least one of a reference to the files composing the cluster, and a time verification record for the cluster for describing the version of the signature.

38. The computer readable media of claim 30 wherein a second portion of the files comprises a web page and further comprising determining a signature for each web page.

39. The computer readable media of claim 38 wherein the web page is at least one of a web page of a markup language based application and a web page dynamically created by procedural applications at a client.

40. The computer readable media of claim 38 wherein said acts further comprise at least one of:

developing a link to the signature and storing the link in the web page; and

storing the signature in the web page.

41. The computer readable media of claim 30 wherein identifying at least a first portion of supplemental television content application files further comprises identifying (1424) a first portion of supplemental television content application files that together compose a web page (1004, 1104); said acts further comprise:

determining (1428) a signature for the web page; and

storing one of a link (1109) to the signature in the web page, or the signature (1009) in the web page.

42. The computer readable media of claim 41 wherein said acts further comprise storing the security information resource file in the web page.

43. The computer readable media of claim 42 wherein the security information resource file comprises at least one of security policy information data, and delegate data identifying delegates that may sign the cluster or the application.

44. One or more computer readable media having stored thereon a plurality of instructions that, when executed by at least one processor, causes the processor to perform acts comprising:

determining (1504) if any supplemental television content application files are arranged in a cluster, the supplemental content application being a collection of files carrying code and associated objects;

for each cluster,

determining (1508) the location of the signature of the cluster files that compose the cluster,

determining (1512) the files that compose the cluster; and

verifying (1516) the integrity of the files in the cluster by operations including verifying the signature;

wherein determining the location of the signature of the cluster files comprises decoding a security information resource file to obtain the location of the cluster signatures.

45. The computer readable media of claim 44 wherein the act of determining if any of the files are arranged in clusters further comprises:

determining if an application start file (202, 302) has a record that includes one of a reference to the security information resource file having the location of the signature, and the security information resource file;

reading from the security information resource file the location of a file having a signature of a cluster for each cluster; and

determining if the signatures can be verified.

46. The computer readable media of claim 45 wherein each of the files composing a cluster is stored in one of the security information resource file, and

a file storing a signature.

47. The computer readable media of claim 45 wherein each signature is based on a hash of each file composing the cluster.

48. The computer readable media of claim 45 wherein the act of reading further comprises reading whether there are any delegates that may sign the cluster or the application for any of the clusters, and determining if a signature is valid based on the delegates.

49. The computer readable media of claim 45 further comprising reading time verification information for describing the version of the signature associated with a cluster and determining if the signature may be valid based on the time verification information.

50. The computer readable media of claim 44 wherein said acts further comprise determining if any of the files is a web page file having one of a link to a signature and a signature; reading the signature, and verifying the signature.

51. The computer readable media of claim 44 wherein the acts further comprise:

determining (1520) if any supplemental television content application files compose web pages; and

if any of the files compose web pages, then
for each of the web pages, decoding (1524) the web page file to determine (1528) if the web page has one of a link to a digital signature and a digital signature,
reading (1532) the signature, and
verifying (1536) the signature.

**Patentansprüche**

1.  Verfahren zum Signieren einer Anwendung für ergänzenden Fernsehinhalt, die eine Sammlung von Dateien, die Code enthalten, und dazugehörigen Objekten ist, wobei das Verfahren umfasst:

    Identifizieren (1404) wenigstens eines ersten Teils ($200_1$-$200_M$, $200_T$-$200_V$) der Dateien in wenigstens einem Cluster ($214_1$, $214_N$);
    Bestimmen (1412) einer Cluster-Signatur ($211_1$, $211_N$) für jeden Cluster; und
    Erstellen (1416) einer Sicherheitsinformations-Ressourcen-Datei (100), die eine Spezifikation (120, $120_A$) der Position der Signatur enthält.

2.  Verfahren nach Anspruch 1, wobei die Signatur für jeden Cluster auf einem Hash-Code der Dateien basiert, die den Cluster bilden.

3.  Verfahren nach Anspruch 1, wobei die Anwendung eine Start-Datei (202, 302) umfasst, und das Verfahren des Weiteren Speichern der Sicherheitsinformations-Ressourcen-Datei in der Start-Datei umfasst.

4.  Verfahren nach Anspruch 1, wobei die Anwendung eine Start-Datei umfasst, und das Verfahren des Weiteren Speichern einer Verknüpfung mit der Sicherheitsinformations-Ressourcen-Datei in der Start-Datei umfasst.

5.  Verfahren nach Anspruch 1, das des Weiteren Speichern wenigstens von Delegate-Informationen, die Delegates identifizieren, die den Cluster oder die Anwendung signieren können, von Sicherheitsrichtlinien-Informationen, von Zeitverifikations-Informationen zum Beschreiben der Version der Signatur oder von Dateiidentifizierungs-Informationen für jeden Cluster in der Sicherheitsinformations-Ressourcen-Datei umfasst.

6.  Verfahren nach Anspruch 1, das des Weiteren Speichern der Cluster-Signatur in einer Signatur-Datei, Erstellen eines Verweises auf die Dateien, die den Cluster bilden, und Speichern des Verweises auf die Dateien in der Signatur-Datei umfasst.

7.  Verfahren nach Anspruch 1, das des Weiteren Speichern der Cluster-Signatur in einer Signatur-Datei, Erstellen eines Zeitverifikations-Eintrags für den Cluster zum Beschreiben der Version der Signatur und Speichern des Zeitverifikations-Eintrags in der Signatur-Datei umfasst.

8.  Verfahren nach Anspruch 1, das des Weiteren Erstellen wenigstens eines Verweises auf die Dateien, die den Cluster bilden, oder eines Zeitverifikations-Eintrags für den Cluster zum Beschreiben der Version der Signatur umfasst.

9.  Verfahren nach Anspruch 1, wobei ein zweiter Teil der Dateien eine Webseite umfasst, und das Verfahren des Weiteren Bestimmen einer Signatur für jede Webseite umfasst.

10. Verfahren nach Anspruch 9, wobei die Webseite wenigstens eine Webseite einer auf Auszeichnungssprache (markup language) basierenden Anwendung oder eine Webseite ist, die dynamisch durch prozedurale Anwendungen an einem Client erzeugt wird.

11. Verfahren nach Anspruch 9, das des Weiteren wenigstens umfasst:

    Erstellen einer Verknüpfung mit der Signatur und Speichern der Verknüpfung in der Webseite; und
    Speichern der Signatur in der Webseite.

12. Verfahren nach Anspruch 1, wobei Identifizieren wenigstens eines ersten Teils der Dateien, des Weiteren Identifizieren (1424) eines ersten Teils der Dateien umfasst, die zusammen eine Webseite (1004, 1104) bilden, wobei das Verfahren umfasst:

**15**

Bestimmen (1428) einer Signatur für die Webseite; und
Speichern einer Verknüpfung (1109) mit der Signatur in der Webseite oder der Signatur (1009) in der Webseite.

13. Verfahren nach Anspruch 12, das des Weiteren Speichern der Sicherheitsinformations-Ressourcen-Datei in der Webseite umfasst.

14. Verfahren nach Anspruch 13, wobei die Sicherheitsinformations-Ressourcen-Datei wenigstens Sicherheitsrichtlinien-Informationsdaten oder Delegate-Daten umfasst, die Delegates identifizieren, die den Cluster oder die Anwendung signieren können.

15. Verfahren zum Ausführen einer Anwendung für ergänzenden Fernsehinhalt, die eine Sammlung von Dateien, die Code enthalten, und dazugehörigen Objekten ist, wobei das Verfahren umfasst:

Bestimmen (1504), ob etwaige der Dateien in einem Cluster angeordnet sind;
für jeden Cluster:

Bestimmen (1508) der Position der Signatur des Clusters;
Bestimmen (1512) der Dateien, die den Cluster bilden; und
Verifizieren (1516) der Integrität der Dateien in dem Cluster mittels Operationen, die ein Verifizieren der Signatur einschließen;
wobei das Bestimmen der Position der Signatur des Clusters das Dekodieren einer Sicherheitsinformations-Ressourcen-Datei umfasst, um die Position der Cluster-Signaturen zu ermitteln.

16. Verfahren nach Anspruch 15, wobei die Operation, mit der bestimmt wird, ob etwaige der Dateien in Clustern angeordnet sind, des Weiteren umfasst:

Bestimmen, ob eine Anwendungs-Start-Datei (202, 302) einen Eintrag aufweist, der einen Verweis auf die Sicherheitsinformations-Ressourcen-Dateien, die die Position der Signatur aufweist, oder die Sicherheitsinformations-Ressourcen-Datei enthält;
Lesen der Position einer Datei, die eine Signatur eines Clusters aufweist, für jeden Cluster aus der Sicherheitsinformations-Ressourcen-Datei; und
Bestimmen, ob die Signaturen verifiziert werden können.

17. Verfahren nach Anspruch 16, wobei jede der Dateien, die einen Cluster bilden, in der Sicherheitsinformations-Ressourcen-Datei oder einer Datei gespeichert ist, die eine Signatur speichert.

18. Verfahren nach Anspruch 16, wobei jede Signatur auf einem Hash jeder Datei basiert, die den Cluster bildet.

19. Verfahren nach Anspruch 16, wobei der Lesevorgang des Weiteren umfasst, dass gelesen wird, ob etwaige Delegates, die den Cluster oder die Anwendung signieren können, für etwaige der Cluster vorhanden sind, und auf Basis der Delegates bestimmt wird, ob eine Signatur gültig ist.

20. Verfahren nach Anspruch 16, das des Weiteren umfasst, das Zeitverifikations-Informationen zum Beschreiben der Version der Signatur, die mit einem Cluster zusammenhängt, gelesen werden und auf Basis der Zeitverifikations-Informationen bestimmt wird, ob die Signatur gültig sein kann.

21. Verfahren nach Anspruch 15, das des Weiteren umfasst, dass bestimmt wird, ob eine der Dateien eine Webseiten-Datei ist, die eine Verknüpfung mit einer Signatur oder eine Signatur aufweist, dass die Signatur gelesen wird und die Signatur verifiziert wird.

22. Verfahren nach Anspruch 15, das des Weiteren umfasst:

Bestimmen (1520), ob etwaige Dateien Webseiten bilden; und
wenn etwaige der Dateien Webseiten bilden,
für jede der Webseiten Dekodieren (1524) der Webseite, um zu bestimmen (1528), ob die Webseite eine Verknüpfung mit einer digitalen Signatur oder eine digitale Signatur aufweist,
Lesen (1532) der Signatur, und
Verifizieren (1536) der Signatur.

23. Architektur für ergänzende Fernsehinhalte, die umfasst:

Anwendungsdateien ($200_1$-$200_M$, $200_T$-$200_V$) und
wenigstens eine Signaturdatei ($210_1$, $210_N$), die eine Signatur ($211_1$, $211_N$) wenigstens eines Teils ($214_1$, $214_N$) der Anwendungsdateien aufweist, wobei die Signatur-Datei separat von den Anwendungsdateien ist; und eine Start-Datei (202, 302), die eine Sicherheitsinformations-Ressourcen-Datei (100) mit einer Verknüpfung zu jeder Signatur-Datei aufweist, und eine Verknüpfung (306) zu einer Sicherheitsinformations-Ressourcen-Datei, die eine Verknüpfung mit jeder Signatur-Datei aufweist.

24. Architektur nach Anspruch 23, die des Weiteren umfasst:

wenigstens eine Webseite (1004, 1104), die wenigstens einen Teil der Anwendungsdateien umfasst, wobei jede Webseite, die mit einer Signatur (1009) oder einer Verknüpfung (1109) mit der Signatur (1112) kodiert ist.

25. Architektur nach Anspruch 23, wobei die Sicherheitsinformations-Ressourcen-Datei des Weiteren Cluster-Informationen aufweist.

26. Architektur nach Anspruch 23, wobei die Sicherheitsinformations-Ressourcen-Datei des Weiteren wenigstens Delegate-Informationen, die Delegates identifizieren, die den Cluster oder die Anwendung signieren können, oder Sicherheitsrichtlinien-Informationen aufweist.

27. Architektur nach Anspruch 23, wobei die Signatur-Datei des Weiteren wenigstens einen Verweis auf Cluster-Dateien oder Zeitverifikations-Informationen zum Beschreiben der Signatur aufweist.

28. Architektur nach Anspruch 24, wobei die Webseite des Weiteren einen Metadaten-Ausdruck umfasst.

29. Architektur nach Anspruch 28, wobei der Metadaten-Ausdruck wenigstens Sicherheitsrichtlinien-Informationen oder Signatur-Delegate-Informationen umfasst.

30. Ein oder mehrere computerlesbare/s Medium/Medien auf dem/denen eine Vielzahl von Befehlen gespeichert sind, die, wenn sie von wenigstens einem Prozessor ausgeführt werden, den Prozessor veranlassen, Vorgänge durchzuführen, die umfassen:

Identifizieren (1404) wenigstens eines ersten Teils ($200_1$-$200_M$, $200_T$-$200_V$) von Anwendungsdateien für ergänzende Fernsehinhalte in wenigstens einem Cluster ($214_1$, $214_N$), wobei die Anwendung für ergänzende Fernsehinhalte eine Sammlung von Dateien, die Code enthalten, und dazugehörigen Objekten ist;
Bestimmen (1412) einer Cluster-Signatur ($211_1$, $211_N$) für jeden Cluster; und
Erstellen (1416) einer Sicherheitsinformations-Ressourcen-Datei (100), die eine Spezifikation (120, $120_A$) der Position der Signatur enthält.

31. Computerlesbare Medien nach Anspruch 30, wobei die Signatur für jeden Cluster auf einem Hash-Code der Dateien basiert, die den Cluster bilden.

32. Computerlesbare Medien nach Anspruch 30, wobei die Anwendung eine Start-Datei umfasst und die Vorgänge des Weiteren Speichern der Sicherheitsinformations-Ressourcen-Datei in der Start-Datei umfassen.

33. Computerlesbare Medien nach Anspruch 30, wobei die Anwendung eine Start-Datei umfasst und die Vorgänge des Weiteren Speichern einer Verknüpfung mit der Sicherheitsinformations-Ressourcen-Datei in der Start-Datei umfassen.

34. Computerlesbare Medien nach Anspruch 30, wobei die Sicherheitsinformations-Ressourcen-Datei des Weiteren Delegate-Informationen, die Delegates identifizieren, die den Cluster oder die Anwendung signieren können, Sicherheitsrichtlinien-Informationen, Zeitverifikations-Informationen zum Beschreiben der Version der Signatur oder Dateiidentifizierungs-Informationen für jeden Cluster enthält.

35. Computerlesbare Medien nach Anspruch 30, wobei die Vorgänge des Weiteren Speichern der Cluster-Signatur in einer Signatur-Datei, Erstellen eines Verweises auf die Dateien, die den Cluster bilden und Speichern des Verweises auf die Dateien in der Signatur-Datei umfassen.

36. Computerlesbare Medien nach Anspruch 30, wobei die Vorgänge des Weiteren Speichern der Cluster-Signatur in einer Signatur-Datei, Erstellen eines Zeitverifikations-Eintrages für den Cluster zum Beschreiben der Version der Signatur und Speichern des Zeitverifikations-Eintrages in der Signatur-Datei umfassen.

37. Computerlesbare Medien nach Anspruch 30, wobei die Vorgänge des Weiteren Erstellen wenigstens eines Verweises auf die Dateien, die den Cluster bilden, oder eines Zeitverifikations-Eintrages für den Cluster zum Beschreiben der Version der Signatur umfassen.

38. Computerlesbare Medien nach Anspruch 30, wobei ein zweiter Teil der Dateien eine Webseite umfasst, und des Weiteren umfassend:

    Bestimmen einer Signatur für jede Webseite.

39. Computerlesbare Medien nach Anspruch 38, wobei die Webseite wenigstens eine Webseite einer auf Auszeichnungssprache (markup language) basierenden Anwendung oder eine Webseite ist, die dynamisch durch prozedurale Anwendungen an einem Client erzeugt wird.

40. Computerlesbare Medien nach Anspruch 38, wobei die Vorgänge des Weiteren wenigstens umfassen:

    Erstellen einer Verknüpfung mit der Signatur und Speichern der Verknüpfung in der Webseite; und
    Speichern der Signatur in der Webseite.

41. Computerlesbares Medium nach Anspruch 30, wobei Identifizieren wenigstens eines ersten Teils ergänzender Fernsehinhalt-Anwendungsdateien des Weiteren Identifizieren (1424) eines ersten Teils ergänzender Fernsehinhalt-Anwendungsdateien umfasst, die zusammen eine Webseite (1004, 1104) bilden und die Vorgänge des Weiteren umfassen:

    Bestimmen (1428) einer Signatur für die Webseite; und
    Speichern einer Verknüpfung (1109) mit der Signatur in der Webseite oder der Signatur (1009) in der Webseite.

42. Computerlesbares Medium nach Anspruch 41, wobei die Vorgänge des Weiteren Speichern der Sicherheitsinformations-Ressourcen-Datei in der Webseite umfassen.

43. Computerlesbare Medien nach Anspruch 42, wobei die Sicherheitsinformations-Ressourcen-Datei wenigstens Sicherheitsrichtlinien-Informationsdaten oder Delegate-Daten umfasst, die Delegates identifizieren, die den Cluster oder die Anwendung signieren können.

44. Ein oder mehrere computerlesbare/s Medium/Medien, auf dem/denen eine Vielzahl von Befehlen gespeichert sind, die, wenn sie von wenigstens einem Prozessor ausgeführt werden, den Prozessor veranlassen, Vorgänge durchzuführen, die umfassen:

    Bestimmen (1504), ob Anwendungsdateien für ergänzende Fernsehinhalte in einem Cluster angeordnet sind, wobei die Anwendung für ergänzende Inhalte eine Sammlung von Dateien, die Code beinhalten, und dazugehörigen Objekten ist;
    für jeden Cluster:

        Bestimmen (1508) der Position der Signatur der Clusterdateien, die den Cluster bilden;
        Bestimmen (1512) der Dateien, die den Cluster bilden; und
        Verifizieren (1516) der Integrität der Dateien in dem Cluster mittels Operationen, die das Verifizieren der Signatur einschließen;
        wobei das Bestimmen der Position der Signatur des Clusters ein Dekodieren einer Sicherheitsinformations-Ressourcen-Datei umfasst, um die Position der Cluster-Signaturen zu ermitteln.

45. Computerlesbare Medien nach Anspruch 44, wobei der Vorgang des Bestimmens, ob etwaige der Dateien in Clustern angeordnet sind, des Weiteren umfasst:

    Bestimmen, ob eine Anwendungs-Start-Datei (202, 302) einen Eintrag aufweist, der einen Verweis auf die Sicherheitsinformations-Ressourcen-Dateien, die die Position der Signatur aufweist, oder die Sicherheitsinformations-Ressourcen-Datei enthält;
Lesen der Position einer Datei, die eine Signatur eines Clusters aufweist, für jeden Cluster aus der Sicherheitsinformations-Ressourcen-Datei; und
Bestimmen, ob die Signaturen verifiziert werden können.

46. Computerlesbare Medien nach Anspruch 45, wobei jede der Dateien, die einen Cluster bilden, in der Sicherheitsinformations-Ressourcen-Datei, oder einer Datei gespeichert ist, die eine Signatur speichert.

47. Computerlesbare Medien nach Anspruch 45, wobei jede Signatur auf einem Hash jeder Datei basiert, die den Cluster bildet.

48. Computerlesbare Medien nach Anspruch 45, wobei der Vorgang des Lesens des Weiteren umfasst, dass gelesen wird, ob etwaige Delegates, die den Cluster oder die Anwendung signieren können, für etwaige der Cluster vorhanden sind, und auf Basis der Delegates bestimmt wird, ob eine Signatur gültig ist.

49. Computerlesbare Medien nach Anspruch 45, das des Weiteren umfasst, das Zeitverifikations-Informationen zum Beschreiben der Version der Signatur, die mit einem Cluster zusammenhängt, gelesen werden und auf Basis der Zeitverifikations-Informationen bestimmt wird, ob die Signatur gültig sein kann.

50. Computerlesbare Medien nach Anspruch 44, das des Weiteren umfasst, dass bestimmt wird, ob eine der Dateien eine Webseiten-Datei ist, die eine Verknüpfung mit einer Signatur oder eine Signatur aufweist, dass die Signatur gelesen wird und die Signatur verifiziert wird.

51. Computerlesbare Medien nach Anspruch 44, das des Weiteren umfasst:

Bestimmen (1520), ob irgendwelche Anwendungsdateien für ergänzende Fernsehinhalte Webseiten bilden; und wenn irgendwelche der Dateien Webseiten bilden,
für jede der Webseiten Dekodieren (1524) der Webseitendatei, um zu bestimmen (1528), ob die Webseite eine Verknüpfung mit einer digitalen Signatur oder eine digitale Signatur aufweist,
Lesen (1532) der Signatur, und
Verifizieren (1536) der Signatur.

**Revendications**

1. Procédé de signature d'une application complémentaire de contenu télévisuel, constituée d'un ensemble de fichiers contenant un code et des objets associés, le procédé comportant :

l'identification (1404) d'au moins une première partie ($220_1$-$220_M$, $200_T$-$200_V$) des fichiers dans au moins un groupe ($214_1$, $214_N$) ;
la détermination (1412) d'une signature de groupe ($211_1$, $211_N$) pour chaque groupe ; et
le développement (1416) d'un fichier de ressources d'informations de sécurité (100) qui inclut une spécification ($120,120_A$) de la localisation de la signature.

2. Procédé selon la revendication 1, dans lequel ladite signature de chaque groupe est basée sur un code de hachage des fichiers constituant le groupe.

3. Procédé selon la revendication 1, dans lequel l'application comporte un fichier de démarrage (202, 302) et comporte en outre le stockage du fichier de ressources d'informations de sécurité dans le fichier de démarrage.

4. Procédé selon la revendication 1, dans lequel l'application comporte un fichier de démarrage et comporte en outre le stockage d'un lien vers le fichier de ressources d'informations de sécurité dans le fichier de démarrage.

5. Procédé selon la revendication 1, comportant en outre le stockage dans le fichier de ressources d'informations de sécurité d'au moins l'une des informations suivantes : des informations de délégués identifiant des délégués susceptibles d'apposer leur signature sur le groupe ou l'application, des informations de politique de sécurité, des informations de vérification temporelle servant à décrire la version de la signature et des informations d'identification de fichiers pour chaque groupe.

**6.** Procédé selon la revendication 1, comportant en outre le stockage de la signature du groupe dans un fichier de signature, le développement d'une référence aux fichiers constituant le groupe et le stockage de la référence aux fichiers dans le fichier de signature.

**7.** Procédé selon la revendication 1, comportant en outre le stockage de la signature du groupe dans un fichier de signature, le développement d'un enregistrement de vérification temporelle pour le groupe afin de décrire la version de la signature et le stockage de l'enregistrement de vérification temporelle dans le fichier de signature.

**8.** Procédé selon la revendication 1, comportant en outre le développement d'au moins l'un d'une référence aux fichiers constituant le groupe et d'un enregistrement de vérification temporelle du groupe destiné à décrire la version de la signature.

**9.** Procédé selon la revendication 1, dans lequel une seconde partie des fichiers comporte une page Web et comporte en outre la détermination d'une signature pour chacune des pages Web.

**10.** Procédé selon la revendication 9, dans lequel la page Web est constituée de l'une au moins d'une page Web d'une application basée sur un langage de marquage et d'une page Web créée dynamiquement par des applications procédurales sur un client.

**11.** Procédé selon la revendication 9, comportant en outre l'une au moins :

du développement d'un lien vers la signature et stocker le lien dans la page Web ; et
du stockage de la signature dans la page Web.

**12.** Procédé selon la revendication 1, dans lequel l'identification d'au moins une première partie des fichiers comporte l'identification (1424) d'une première partie des fichiers qui constituent conjointement une page Web (1004, 1104) ; le procédé comportant :

la détermination (1428) d'une signature pour la page Web ; et
le stockage de l'un d'un lien (1109) vers la signature dans la page Web ou de la signature (1009) dans la page Web.

**13.** Procédé selon la revendication 12, comportant en outre le stockage du fichier de ressources d'informations de sécurité dans la page Web.

**14.** Procédé selon la revendication 13, dans lequel les fichiers de ressources d'informations de sécurité comportent au moins l'un des types de données suivantes :

des données d'informations de politique de sécurité et des données de délégués identifiant des délégués susceptibles d'apposer leur signature sur le groupe ou l'application.

**15.** Procédé destiné à exécuter une application complémentaire de contenu télévisuel, constituée d'un ensemble de fichiers contenant un code et des objets associés, le procédé comportant :

la détermination (1504) si les fichiers sont disposés sous la forme d'un groupe ;
pour chaque groupe :

la détermination (1508) de la localisation de la signature du groupe ;
la détermination (1512) des fichiers qui constituent le groupe ; et
la vérification (1516) de l'intégrité des fichiers du groupe par des opérations incluant la vérification de la signature ;
dans lequel la détermination de la localisation de la signature du groupe comporte le décodage d'un fichier de ressources d'information de sécurité pour obtenir la localisation des signatures de groupe.

**16.** Procédé selon la revendication 15, dans lequel à la détermination si les fichiers sont disposés en groupe comporte en outre les actions :

la détermination si un fichier de démarrage d'application (202, 302) possède un enregistrement incluant l'un d'une référence au fichier de ressources d'informations de sécurité contenant la localisation de la signature, et du fichier de ressources d'informations de sécurité ;
la lecture dans le fichier de ressources d'informations de sécurité de la localisation d'un fichier contenant une signature d'un groupe pour chaque groupe ; et
la détermination s'il est possible de vérifier les signatures.

17. Procédé selon la revendication 16, dans lequel chacun des fichiers constituant un groupe est stocké dans l'un des fichiers suivants : le fichier de ressources d'informations de sécurité et un fichier contenant une signature.

18. Procédé selon la revendication 16, dans lequel chacune des signatures est basée sur un hachage de chacun des fichiers constituant le groupe.

19. Procédé selon la revendication 16, dans lequel l'opération de lecture comporte en outre à la lecture de l'existence ou non des délégués susceptibles d'apposer leur signature pour le groupe ou pour l'application pour l'un quelconque des groupes, et la détermination si une signature est valide en fonction des délégués.

20. Procédé selon la revendication 16, comportant en outre la lecture des informations de vérification temporelle servant à décrire la version de la signature associée à un groupe et la détermination si la signature est valide en fonction des informations de vérification temporelle.

21. Procédé selon la revendication 15, comportant en outre la détermination si l'un des fichiers est un fichier de page Web possédant l'un des éléments suivants : un lien vers une signature et une signature ; lire la signature et vérifier la signature.

22. Procédé selon la revendication 15, comportant en outre :

la détermination (1520) si les fichiers constituent des pages Web ; et
si les fichiers constituent des pages Web, alors
pour chacune des pages Web, le décodage (1524) de la page Web pour déterminer (1528) si la page Web contient l'un des éléments suivants : un lien vers une signature numérique et une signature numérique ;
la lecture (1532) de la signature, et
la vérification (1536) de la signature.

23. Architecture complémentaire de contenu télévisuel, comportant :

des fichiers d'application ($220_1$- $220_M$, $200_T$-$200_V$) ; et
au moins un fichier de signature ($210_1$,$210_N$) contenant une signature ($211_1$, $211_N$) d'au moins une partie ($214_1$, $214_N$) desdits fichiers d'application, le fichier de signature étant séparé desdits fichiers d'application ; et un fichier de démarrage (202, 302) contenant l'un d'un fichier de ressources d'informations de sécurité (100) possédant un lien vers chacun des fichiers de signature, et d'un lien (306) vers un fichier de ressources d'informations de sécurité possédant un lien vers chacun des fichiers de signature.

24. Architecture selon la revendication 23, comportant en outre :

au moins une page Web (1004, 1104) comportant au moins une partie desdits fichiers d'application et chacune des pages Web codée au moyen de l'un des éléments suivants : une signature (1009) et un lien (1109) vers la signature (1112).

25. Architecture selon la revendication 23, dans lequel le fichier de ressources d'informations de sécurité contient en outre des informations de groupe.

26. Architecture selon la revendication 23, dans lequel le fichier de ressources d'informations de sécurité contient en outre au moins l'une des informations suivantes : des informations de délégués identifiant des délégués susceptibles d'apposer leur signature sur le groupe ou l'application et des informations de politique de sécurité.

27. Architecture selon la revendication 23, dans lequel le fichier de signature contient au moins l'une des informations suivantes : une référence à des fichiers de groupe et des informations de vérification temporelle servant à décrire la version de la signature.

**28.** Architecture selon la revendication 24, dans lequel la page Web comporte en outre une expression de métadonnées.

**29.** Architecture selon la revendication 28, dans lequel l'expression de métadonnées comporte au moins l'une des informations suivantes : des informations de politique de sécurité et des informations de délégué de signature.

**30.** Support ou supports lisibles par ordinateur contenant plusieurs instructions qui, lorsqu'elles sont exécutées par au moins un processeur, provoquent l'exécution par le processeur des actions consistant à :

identifier (1404) au moins une première partie ($220_1$-$220_M$, $200_T$-$200_V$) des fichiers d'une application complémentaire de contenu télévisuel dans au moins un groupe ($214_1$, $214_N$), l'application complémentaire de contenu télévisuel étant constituée d'un ensemble de fichiers contenant un code et des objets associés ;
déterminer (1412) une signature de groupe ($211_1$, $211_N$) pour chaque groupe ; et
développer (1416) un fichier de ressources d'informations de sécurité (100) qui inclut une spécification ($120,120_A$) de la localisation de la signature.

**31.** Support lisible par ordinateur selon la revendication 30, dans lequel ladite signature de chaque groupe est basée sur un code de hachage des fichiers constituant le groupe.

**32.** Support lisible par ordinateur selon la revendication 30, dans lequel l'application comporte un fichier de démarrage et lesdites actions comportent en outre le stockage du fichier de ressources d'informations de sécurité dans le fichier de démarrage.

**33.** Support lisible par ordinateur selon la revendication 30, dans lequel l'application comporte un fichier de démarrage et lesdites actions comportent en outre le stockage d'un lien vers le fichier de ressources d'informations de sécurité dans le fichier de démarrage.

**34.** Support lisible par ordinateur selon la revendication 30, dans lequel le fichier de ressources d'informations de sécurité contient en outre au moins l'une des informations suivantes : des informations de délégués identifiant des délégués susceptibles d'apposer leur signature sur le groupe ou l'application, des informations de politique de sécurité, des informations de vérification temporelle servant à décrire la version de la signature et des informations d'identification de fichiers pour chaque groupe.

**35.** Support lisible par ordinateur selon la revendication 30, dans lequel lesdites actions comportent en outre le stockage de la signature du groupe dans un fichier de signature, le développement d'une référence aux fichiers constituant le groupe et le stockage de la référence aux fichiers dans le fichier de signature.

**36.** Support lisible par ordinateur selon la revendication 30, dans lequel lesdites actions comportent en outre le stockage de la signature du groupe dans un fichier de signature, le développement d'un enregistrement de vérification temporelle pour le groupe afin de décrire la version de la signature et le stockage de l'enregistrement de vérification temporelle dans le fichier de signature.

**37.** Support lisible par ordinateur selon la revendication 30, dans lequel lesdites actions comportent en outre le développement d'au moins l'un d'une référence aux fichiers constituant le groupe et d'un enregistrement de vérification temporelle du groupe destiné à décrire la version de la signature.

**38.** Support lisible par ordinateur selon la revendication 30, dans lequel une seconde partie des fichiers comporte une page Web et comporte en outre la détermination d'une signature pour chacune des pages Web.

**39.** Support lisible par ordinateur selon la revendication 38, dans lequel la page Web est constituée de l'une au moins d'une page Web d'une application basée sur un langage de marquage et d'une page Web créée dynamiquement par des applications procédurales sur un client.

**40.** Support lisible par ordinateur selon la revendication 38, dans lequel lesdites actions comportent en outre l'une au moins des actions :

de développement d'un lien vers la signature et stocker le lien dans la page Web ; et
le stockage de la signature dans la page Web.

**41.** Support lisible par ordinateur selon la revendication 30, dans lequel l'action l'identification d'au moins une première partie des fichiers de l'application complémentaire de contenu télévisuel comporte en outre l'identification (1424) d'une première partie des fichiers de l'application complémentaire de contenu télévisuel qui constituent conjointement une page Web (1004, 1104) ; lesdites actions comportant les actions :

la détermination (1428) d'une signature pour la page Web ; et
le stockage de l'un d'un lien (1109) vers la signature dans la page Web ou de la signature (1009) dans la page Web.

**42.** Support lisible par ordinateur selon la revendication 41, dans lequel lesdites actions comportent en outre le stockage du fichier de ressources d'informations de sécurité dans la page Web.

**43.** Support lisible par ordinateur selon la revendication 42, dans lequel les fichiers de ressources d'informations de sécurité comportent au moins l'un des types de données suivants : des données d'informations de politique de sécurité et des données de délégués identifiant des délégués susceptibles d'apposer leur signature sur le groupe ou l'application.

**44.** Support ou supports lisibles par ordinateur contenant plusieurs instructions, qui, lorsqu'elles sont exécutées par au moins un processeur, provoquent la mise en oeuvre par le processeur des actions :

de détermination (1504) si des fichiers d'application complémentaire de contenu télévisuel sont disposés sous la forme d'un groupe, l'application complémentaire de contenu étant constituée d'un ensemble de fichiers contenant un code et des objets associés ;
pour chaque groupe :

la détermination (1508) de la localisation de la signature du groupe ;
la détermination (1512) des fichiers qui constituent le groupe ; et
la vérification (1516) de l'intégrité des fichiers du groupe par des opérations incluant la vérification de la signature ;
dans lequel la détermination de la localisation de la signature du groupe comporte le décodage d'un fichier de ressources d'informations de sécurité pour obtenir la localisation des signatures de groupe.

**45.** Support lisible par ordinateur selon la revendication 44, dans lequel l'action consistant à déterminer si les fichiers sont disposés en groupes comporte en outre :

la détermination si un fichier de démarrage d'application (202, 302) possède un enregistrement incluant l'un d'une référence au fichier de ressources d'informations de sécurité contenant la localisation de la signature, et du fichier de ressources d'informations de sécurité ;
la lecture dans le fichier de ressources d'informations de sécurité de la localisation d'un fichier contenant une signature d'un groupe pour chaque groupe ; et
la détermination s'il est possible de vérifier les signatures.

**46.** Support lisible par ordinateur selon la revendication 45, dans lequel chacun des fichiers constituant un groupe est stocké dans l'un des fichiers suivants :

le fichier de ressources d'informations de sécurité, et
un fichier contenant une signature.

**47.** Support lisible par ordinateur selon la revendication 45, dans lequel chacune des signatures est basée sur un hachage de chacun des fichiers constituant le groupe.

**48.** Support lisible par ordinateur selon la revendication 45, dans lequel l'action de lecture comporte en outre la lecture de l'existence ou non des délégués susceptibles d'apposer leur signature pour le groupe ou pour l'application pour l'un quelconque des groupes, et la détermination si une signature est valide en fonction des délégués.

**49.** Support lisible par ordinateur selon la revendication 45, comportant en outre la lecture des informations de vérification temporelle servant à décrire la version de la signature associée à un groupe et la détermination si la signature est valide en fonction des informations de vérification temporelle.

**50.** Support lisible par ordinateur selon la revendication 44, dans lequel lesdites actions comportent en outre la détermination si l'un des fichiers est un fichier de page Web possédant l'un des éléments suivants : un lien vers une signature et une signature ; lire la signature et vérifier la signature.

**51.** Support lisible par ordinateur selon la revendication 44, comportant en outre les actions :

de détermination (1520) si des fichiers d'application complémentaire de contenu télévisuel constituent des pages Web ; et
si les fichiers constituent des pages Web, alors
pour chacune des pages Web, le décodage (1524) de la page Web pour déterminer (1528) si la page Web contient l'un des éléments suivants : un lien vers une signature numérique et une signature numérique,
la lecture (1532) de la signature, et
la vérification (1536) de la signature.

SECURITY INFORMATION RESOURCE
FILE 100

CLUSTER INFORMATION
METADATA EXPRESSION 110

SIGNATURE LOCATION
METADATA EXPRESSION 120

OTHER INFORMATION
METATDATA EXPRESSIONS 130

SECURITY POLICY
METADATA EXPRESSION
140

DELEGATE METADATA
EXPRESSION 150

# FIG. 1

SECURITY INFORMATION
RESOURCE FILE 100

CLUSTER INFORMATION
METADATA EXPRESSION 110

$110_1$ – – – – – $110_N$

SIGNATURE LOCATION METADATA
EXPRESSION 120

$120_1$ – – – – – $120_I$

OTHER INFORMATION METADATA
EXPRESSIONS 130

START
FILE 202

FILE $220_1$ ········· FILE $220_M$ ················· FILE $200_I$ ········· FILE $200_Y$

CLUSTER $214_1$

CLUSTER $214_N$

SIGNATURE FILE $210_1$

CLUSTER
SIGNATURE $211_1$

REFERENCE TO
CLUSTER FILES $212_1$

TIME VERSION $213_1$

SIGNATURE FILE $210_N$

CLUSTER
SIGNATURE $211_N$

REFERENCE TO
CLUSTER FILES $212_N$

TIME VERSION $213_N$

FIG. 2

SECURITY INFORMATION
RESOURCE FILE 100

CLUSTER INFORMATION
METADATA EXPRESSION 110A

$110_1$ ----- $110_N$

SIGNATURE LOCATION METADATA
EXPRESSION 120A

$120_1$ --- $120_j$

OTHER INFORMATION METADATA
EXPRESSIONS 130

START
FILE 302

REFERENCE TO
SIGNATURE
INFORMATION
RESOURCE FILE 306

FILE
$220_1$

FILE
$220_M$

$FILE_N$
$200_T$

$FILE_N$
$200_V$

CLUSTER $214_1$

CLUSTER $214_N$

SIGNATURE FILE $210_1$

CLUSTER
SIGNATURE $211_1$

REFERENCE TO
CLUSTER FILES $212_1$

TIME VERSION $213_1$

SIGNATURE FILE $210_1$

CLUSTER
SIGNATURE $211_1$

REFERENCE TO
CLUSTER FILES $212_1$

TIME VERSION $213_1$

FIG. 3

```
400

<element name="AppSecurityInfo" type="sec:AppSecurityInfoType"/>

<complexType name="AppSecurityInfoType">
    <sequence>
        <element ref="sec:MainCluster" />
        <element ref="sec:Delegate" minOccurs="0" maxOccurs="unbounded" />
        <element ref="sec:ClusterList" minOccurs="0" />
    </sequence>
</complexType>
```

404   412

408

420   416

## FIG. 4

```
500

<element name="MainCluster" type="sec:MainClusterType"/>

<complexType name="MainClusterType">
    <attribute name="Loc" type="anyURI" use="required" />
    <attribute name="Id" type="ID" use="optional" />
</complexType>
```

504   508

512

## FIG. 5

416    604

**600**

`<element name="Delegate" type="sec:DelegateType"/>`

`<complexType name="DelegateType">`
   `<sequence>`
      `<element ref="DName" />`
      `<element ref="Constraint" minOccurs="0" maxOccurs="unbounded"/>`
   `</sequence>`
`</complexType>`

`<element name`

608

## FIG. 6

704                                    708

**700**

`<element name="Constraint" type="sec:ConstraintType" />`

`<complexType name="ConstraintType">`
   `<sequence>`
      `<element name="notBefore" type="dateTime" minOccurs="0"/>`
      `<element name="notAfter" type="dateTime" minOccurs="0" />`
   `</sequence>`
`</complexType>`

## FIG. 7                712

420

```
800

<element name="ClusterList" type="sec:ClusterListType" />

<complexType name="ClusterListType" >
   <sequence>
      <element ref="sec:Cluster" minOccurs="0" maxOccurs="unbounded" />
   </sequence>
</complexType>
```

## FIG. 8

904          908

```
900

<element name="Cluster" type="sec:ClusterType" />

<complexType name="ClusterType">
   <sequence>
      <element ref="sec:Delegate" minOccurs="0" maxOccurs="unbounded"/>
   </sequence>
   <attribute name="Loc" type="anyURI" use="required" />
   <attribute name="Id" type="ID" use="optional" />
</complexType
```

912

## FIG. 9

FILE 1102<sub>N</sub>

FILE 1002<sub>2</sub>

FILE 1002<sub>1</sub>

SECURITY INFORMATION M RESOURCE FILE 1008<sub>1</sub>

SIGNATURE DATA 1009<sub>1</sub>

WEB PAGE 1004

## FIG. 10

FILE 1102<sub>N</sub>

FILE 1102<sub>2</sub>

FILE 1102<sub>1</sub>

SECURITY INFORMATION RESOURCE FILE 100

SIGNATURE REFERENCE DATA 1109<sub>1</sub>

DETACHED SIGNATURE FILE 1112

WEB PAGE 1104

## FIG. 11

1216   1204   1206   1210

```
1200

<AppSecurityInfo>

<Policy Type="PRF" URI="http://www.myserver.com/prf1.xml"
Status="mandatory"/>
<Policy Type="Privacy" URI="http://www.myserver.com/pri1.xml"
Status="informative"/>

<Delegate>
<DName> Corporation Interactive </DName>
<Constraint Type="notBefore" Value="2003-03-21T13:00"/>
<Constraint Type="notAfter" Value="2005-03-21T23:00"/>
</Delegate>

<Delegate>
<!-- info for a second Delegate goes in here -->
</Delegate>

</AppSecurityInfo>
```

1212

1220

1204   1218

# FIG. 12

```
1300

<element name="VersionNumber" type="sec:VersionNumberType" />
<complexType name="VersionNumberType" mixed="true" >
   <sequence>
      <any namespace="##other" />
   </sequence>
   <attribute name="Value" type="dateTime" use="required"/>
   <attribute name="Id" type="ID" use="optional" />
</complexType>
```

# FIG. 13

1400

IDENTIFYING A PORTION OF
APPLICATION FILES (IF ANY) FOR AT
LEAST ONE CLUSTER

／1404

STORING A REFERENCE TO THE
FILES COMPOSING EACH CLUSTER IN
EACH SIGNATURE FILE

／1408

DETERMINING A CLUSTER
SIGNATURE FOR EACH CLUSTER IN A
SIGNATURE FILE

／1412

DEVELOPING AN EXPRESSION THAT
INCLUDES THE LOCATION OF THE
SIGNATURE FILE

／1416

14B

# FIG. 14A

14B

STORING EITHER THE EXPRESSION, OR A LINK TO THE EXPRESSION, IN THE START FILE — 1420

IDENTIFYING A PORTION OF APPLICATION FILES (IF ANY) THAT COMPOSE AT LEAST ONE WEB PAGE — 1424

DETERMINING A SIGNATURE FOR EACH WEB PAGE — 1428

FOR EACH WEB PAGE, CODING EITHER A LINK TO THE SIGNATURE IN THE WEB PAGE OR THE SIGNATURE IN THE WEB PAGE — 1432

CODING AN EXPRESSION HAVING SECURITY INFORMATION IN EACH WEB PAGE, STORING EITHER A LINK TO THE SIGNATURE IN THE WEB PAGE OR THE SIGNATURE IN THE WEB PAGE — 1436

FIG. 14B

1500

**1504**

ARE ANY FILES ARE ARRANGED IN A CLUSTER — NO →

(A)

**1520**

DO ANY FILES COMPOSE A WEB PAGE — NO →

YES ↓

FOR EACH CLUSTER DETERMINE THE LOCATION OF THE SIGNATURE OF THE CLUSTER **1508**

YES ↓

DECODE EACH WEB PAGE **1524**

FOR EACH CLUSTER DETERMINE THE FILES THAT COMPOSE THE CLUSTER **1512**

FOR EACH WEB PAGE. IS THERE A DIGITAL SIGNATURE OR A LINK TO A SIGNATURE **1528** — NO →

VERIFY THE INTEGRITY OF THE FILES IN THE CLUSTER BY OPERATIONS INCLUDING VERIFYING THE SIGNATURE **1516**

YES ↓

(A)

READ THE SIGNATURE **1532**

VERIFY THE SIGNATURE **1536**

# FIG. 15

**EP 1 408 644 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002124172 A1